(19) Europäisches Patentamt / European Patent Office / Office européen des brevets

(11) **EP 3 338 353 B1**

(12) **EUROPÄISCHE PATENTSCHRIFT**

(45) Veröffentlichungstag und Bekanntmachung des Hinweises auf die Patenterteilung:
**09.06.2021 Patentblatt 2021/23**

(21) Anmeldenummer: **16731843.5**

(22) Anmeldetag: **17.06.2016**

(51) Int Cl.:
**H02M 1/44** *(2007.01)* **H02M 7/48** *(2007.01)*

(86) Internationale Anmeldenummer:
**PCT/EP2016/063981**

(87) Internationale Veröffentlichungsnummer:
**WO 2017/028990 (23.02.2017 Gazette 2017/08)**

(54) **SPANNUNGSUMRICHTER, ELEKTRISCHES ANTRIEBSSYSTEM UND VERFAHREN ZUM REDUZIEREN VON STÖRSPANNUNGEN**

VOLTAGE CONVERTER, ELECTRIC DRIVE SYSTEM AND METHOD FOR REDUCING INTERFERENCE VOLTAGES

CONVERTISSEUR DE TENSION, SYSTÈME D'ENTRAÎNEMENT ÉLECTRIQUE ET PROCÉDÉ DE RÉDUCTION DES TENSIONS PARASITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2015 DE 102015215898**

(43) Veröffentlichungstag der Anmeldung:
**27.06.2018 Patentblatt 2018/26**

(73) Patentinhaber: **Robert Bosch GmbH**
**70442 Stuttgart (DE)**

(72) Erfinder:
• HOENE, Eckart
  13465 Berlin (DE)
• BURGER, Dennis
  71292 Friolzheim (DE)
• SCHNEIDER, Norbert
  71272 Renningen-Malmsheim (DE)
• LAUERSDORF, Martin
  75438 Knittlingen (DE)
• EIDHER, Roland
  72147 Nehren (DE)

(56) Entgegenhaltungen:
DE-A1-102012 109 638    DE-A1-102013 100 246
US-A- 5 552 976    US-A1- 2012 275 201

• "Elektromagnetische Verträglichkeit, Chapter 3: Koppelmechanismen und Gegenmassnahmen; Chapter 4: Passive Entstörkomponenten; Chapter 11: ??EMV gerechter Entwurf elektronischer Baugruppen ED - Schwab Adolf; Kürner Wolfgang", 1. Januar 2011 (2011-01-01), ELEKTROMAGNETISCHE VERTRÄGLICHKEIT; [VDI-[BUCH]], SPRINGER VERLAG, HEIDELBERG, PAGE(S) 111 - 112,157, XP002731659, ISBN: 978-3-642-16609-9 Abbildung 4.15

EP 3 338 353 B1

**Beschreibung**

Die vorliegende Erfindung betrifft einen Spannungsumrichter und ein elektrisches Antriebssystem mit einem Spannungsumrichter sowie ein Verfahren zum Reduzieren von Störspannungen. Insbesondere betrifft die vorliegende Erfindung die Reduzierung von Störspannungen von einem Spannungsumrichter.

Stand der Technik

Die Deutsche Patentanmeldung DE 41 07 391 A1 offenbart ein Elektrofahrzeug mit einem batteriegespeisten Wechselrichter, insbesondere mit einem Pulswechselrichter. Ein dreiphasiger Fahrmotor eines Elektrofahrzeugs wird dabei über einen Wechselrichter gespeist. Der Wechselrichter bezieht seine Energie von einer Batterie.

Pulswechselrichter können bei einer kapazitiven Belastung, wie sie zum Beispiel durch Streukapazitäten in einer angeschlossenen elektrischen Maschine auftreten, Gleichtaktstörungen hervorrufen. Dabei ist es wünschenswert, das im Umfeld einer elektrischen Maschine emittierte Störspannungsspektrum zu reduzieren, um beispielsweise den Rundfunkempfang, insbesondere im Mittelwellen-Frequenzbereich, zu verbessern. Neben aktiven Filtertechniken ist es dabei beispielsweise bekannt, in die Anschlussleitung zwischen Pulswechselrichter und elektrischer Maschine eine Gleichtaktdrossel zu integrieren. Da es sich bei den angeschlossenen elektrischen Maschinen in der Regel um mehrphasige Maschinen handelt, muss eine solche Gleichtaktdrossel sämtliche Anschlussleitungen umfassen.

Druckschrift DE 10 2013 100 246 A1 offenbart eine Stromsensor- und Entstörfilteranordnung für einen Photovoltaik-Wechselrichter. Hierzu wird insbesondere vorgeschlagen, am Eingang des Wechselrichters eine Entstörfiltereinrichtung vorzusehen.

Druckschrift DE 10 2012 109 638 A1 offenbart einen Multistring-Wechselrichter mit einem eingangsseitigen EMV-Filter.

Druckschrift US 5 552 976 A offenbart eine EMV-Filtertopologie für einen Leistungs- Wechselrichter.

Druckschrift US 2012/275201 A1 offenbart einen Netz-Wechselrichter mit einem eingangsseitigen Filter.

Aufgrund der steigenden Bedeutung von Elektrofahrzeugen besteht daher ein Bedarf nach einem Spannungsumrichter, der eine effektive und gleichzeitig kostengünstige Filterung von Störspannungen ermöglicht.

Offenbarung der Erfindung

Hierzu schafft die vorliegende Erfindung gemäß einem ersten Aspekt einen Spannungsumrichter mit den Merkmalen des unabhängigen Patentanspruchs 1.

Vorteile der Erfindung

Der vorliegenden Erfindung liegt die Idee zugrunde, am Eingang eines Wechselrichters eine stromkompensierte Drossel vorzusehen, um auf diese Weise Gleichtaktstörungen des Wechselrichters zu minimieren. Vorzugsweise ist die hierfür erforderliche stromkompensierte Drossel auf der Gleichspannungsseite des Wechselrichters zwischen einem Zwischenkreiskondensator und eingangsseitigen Y-Kondensatoren vorgesehen. Der Zwischenkreiskondensator liegt dabei zwischen den beiden Eingangsanschlüssen des Wechselrichters. Die Y-Kondensatoren sind jeweils zwischen einem Bezugspotential und einem Anschluss des Gleichspannungseingangs des Wechselrichters vorgesehen.

Durch die Anordnung einer stromkompensierten Drossel auf der Eingangsseite des Wechselrichters können Gleichtaktstörungen des Wechselrichters sehr gut minimiert werden. Daher muss ausgangsseitig in der mehrphasigen Verbindung zwischen Wechselrichter und Verbraucher in dieser mehrphasigen Verbindung keine stromkompensierte Drossel vorgesehen werden, die aufgrund der höheren Phasenanzahl zwischen Wechselrichter und Verbraucher sehr aufwändig wäre. Der erfindungsgemäße Spannungsumrichter ermöglicht somit eine einfache und kostengünstige Unterdrückung von Störungen.

Gemäß einer Ausführungsform umfasst der Gleichspannungseingang des Wechselrichters einen ersten Anschluss und einen zweiten Anschluss. Die stromkompensierte Drossel des Spannungsumrichters umfasst ferner eine erste Wicklung und eine zweite Wicklung. Die erste Wicklung der stromkompensierten Drossel ist dabei zwischen dem ersten Anschluss des Gleichspannungseingangs des Wechselrichters und einem ersten Anschluss der Gleichspannungsquelle angeordnet. Die zweite Wicklung der stromkompensierten Drossel ist zwischen dem zweiten Anschluss des Gleichspannungseingangs des Wechselrichters und einem zweiten Anschluss der Gleichspannungsquelle angeordnet.

Gemäß einer weiteren Ausführungsform umfasst der Spannungsumrichter ferner einen Zwischenkreiskondensator. Dieser Zwischenkreiskondensator ist zwischen dem ersten Anschluss und dem zweiten Anschluss des Gleichspannungseingangs des Wechselrichters angeordnet. Insbesondere ist der Zwischenkreiskondensator zwischen der stromkompensierten Drossel und dem Gleichspannungseingang des Wechselrichters angeordnet. Ferner kann der Spannungsumrichter auch sogenannte Y-Kondensatoren umfassen. Diese Y-Kondensatoren sind dabei jeweils auf einer Seite mit einem gemeinsamen Bezugspotential verbunden. Der andere Anschluss der Y-Kondensatoren ist dabei jeweils mit einem Anschluss des Wechselrichters gekoppelt. Die Y-Kondensatoren sind dabei vor der stromkompensierten Drossel angeordnet, das heißt die Y-Kondensatoren sind zwischen der Gleichspannungsquelle und der stromkompensierten Drossel angeordnet. In diesem Ausführungsbeispiel ist die stromkompensierte Drossel somit zwischen den Y-Kondensatoren und dem Zwischenkreiskondensator angeordnet.

Gemäß einem weiteren Aspekt schafft die vorliegende Erfindung ein elektrisches Antriebssystem mit einer Gleichspannungsquelle, einem elektrischen Motor und einem erfindungsgemäßen Spannungsumrichter.

Weitere Ausführungsformen und Vorteile der vorliegenden Erfindung ergeben sich aus der nachfolgenden Beschreibung unter Bezug auf die beigefügten Zeichnungen.

Kurze Beschreibung der Zeichnungen

Dabei zeigen:

Figur 1:    eine schematische Darstellung eines elektrischen Antriebssystems mit einem Spannungsumrichter gemäß einem Ausführungsbeispiel;

Figur 2:    eine schematische Darstellung eines elektrischen Antriebssystems mit einem Spannungsumrichter gemäß einem weiteren Ausführungsbeispiel; und

Figur 3:    eine schematische Darstellung eines Ablaufdiagramms, wie es einem Verfahren zum Reduzieren von Störspannungen gemäß einem Ausführungsbeispiel zugrunde liegt.

Beschreibung von Ausführungsformen

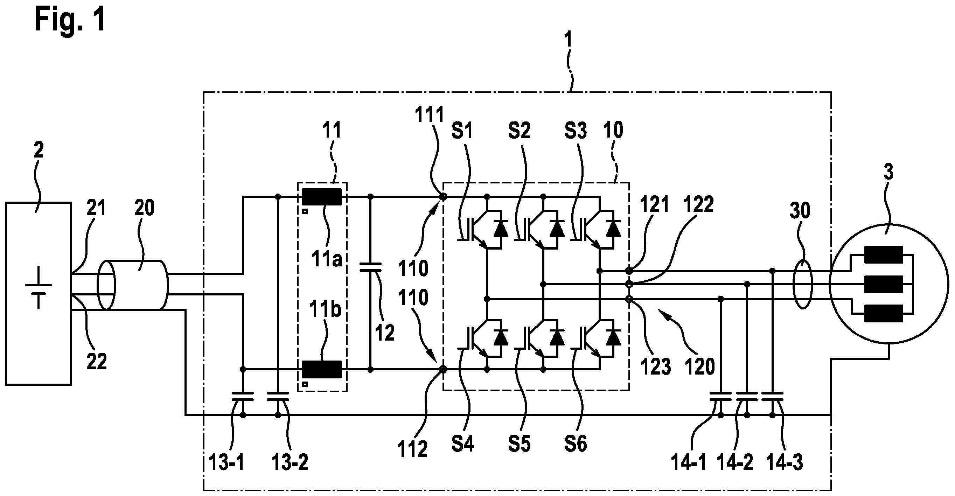

Figur 1 zeigt eine schematische Darstellung eines elektrischen Antriebssystems gemäß einer Ausführungsform. Das elektrische Antriebssystem umfasst eine Gleichspannungsquelle 2, einen elektrischen Verbraucher 3 sowie einen Spannungsumrichter 1. Darüber hinaus kann das elektrische Antriebssystem gegebenenfalls je nach Bedarf auch noch weitere Komponenten umfassen. Zum besseren Verständnis der Erfindung wurden jedoch mögliche weitere Komponenten des elektrischen Antriebssystems hier nicht dargestellt. Bei der Gleichspannungsquelle 2 kann es sich beispielsweise um eine Batterie handeln. Insbesondere ist zum Beispiel als Gleichspannungsquelle 2 die Traktionsbatterie eines Elektrofahrzeugs möglich. Darüber hinaus sind jedoch als Gleichspannungsquelle 2 beliebige weitere Gleichspannungsquellen möglich. Bei dem elektrischen Verbraucher 3 kann es sich, wie hier dargestellt, beispielsweise um einen dreiphasigen elektrischen Motor handeln. Als elektrischer Verbraucher 3 sind dabei zum Beispiel beliebige Elektromotoren möglich. Insbesondere kann es sich bei dem elektrischen Motor 3 um eine Asynchronmaschine oder eine Synchronmaschine handeln. Die hier dargestellte Anzahl von drei elektrischen Phasen für den elektrischen Verbraucher 3 ist dabei ebenfalls nur beispielshaft zu verstehen. Darüber hinaus sind auch beliebige elektrische Motoren, oder auch beliebige andere elektrische Verbraucher möglich, die ein von drei abweichende Anzahl von Phasen haben. Insbesondere sind auch elektrische Verbraucher mit sechs Phasen möglich.

Auch wenn im Nachfolgenden das elektrische Antriebssystem dahingehend beschrieben wird, dass ein Spannungsumrichter 1 von einer Gleichspannungsquelle 2 gespeist wird und der Wechselrichter 1 am Ausgang mit einem elektrischen Verbraucher 3 verbunden ist, so kann das Antriebssystem darüber hinaus gegebenenfalls in einem weiteren Betriebsmodus auch elektrische Energie, die von dem elektrischen Motor in einem Generatorbetrieb bereitgestellt wird, durch den Wechselrichter 1 in eine Gleichspannung umformen. Diese Gleichspannung kann daraufhin in die Gleichspannungsquelle 2 eingespeist werden, um beispielsweise auf diese Weise eine Batterie zu laden.

Der Spannungsumrichter 1 umfasst dabei einen Wechselrichter 10. Bei dem Wechselrichter 10 kann es sich zum Beispiel um einen Pulswechselrichter (PWR) handeln. Insbesondere kann der Wechselrichter 10, wie in Figur 1 schematisch dargestellt, beispielsweise eine Mehrzahl von Schaltelementen S1 bis S6 umfassen. Bei diesen Schaltelementen kann es sich beispielsweise um Halbleiterschaltelemente in Form von IGBT oder MOSFET handeln. Der grundsätzliche Aufbau von Wechselrichter, insbesondere von Pulswechselrichtern, ist jedoch bekannt, so dass der Aufbau hier nicht im Detail beschrieben werden muss.

Auf der Gleichspannungsseite weist der Wechselrichter 10 einen zweiphasigen Gleichspannungseingang 110 auf. Ein erster Anschluss 111 des Gleichspannungseingangs 100 ist dabei mit einem Anschluss 21 der Gleichspannungsquelle 2 verbunden. Der andere Anschluss 112 des Gleichspannungseingangs 110 des Wechselrichters 10 ist mit einem weiteren Anschluss 22 der Gleichspannungsquelle 2 verbunden. Zwischen der Gleichspannungsquelle 2 und dem Wechselrichter 10 umfasst der Spannungsumrichter 1 darüber hinaus eine stromkompensierte Drossel 11. Die stromkompensierte Drossel 11 umfasst dabei zwei Wicklungen 11a und 11b. Eine Wicklung der stromkompensierten Drossel 11 ist dabei zwischen dem ersten Anschluss 21 der Gleichspannungsquelle 2 und dem ersten Anschluss 111 des Wechselrichters 10 angeordnet. Die zweite Wicklung 11b der stromkompensierten Drossel 11 ist zwischen dem zweiten Anschluss 22 der Gleichspannungsquelle 2 und dem zweiten Anschluss 112 des Gleichspannungseingangs 110 des Wechselrichters 10 angeordnet.

Darüber hinaus kann der Spannungsumrichter 1 zwischen der stromkompensierten Drossel 11 und dem Gleichspannungseingang 110 des Wechselrichters 10 einen Zwischenkreiskondensator 12 umfassen. Dieser Zwischenkreiskondensator 12 ist dabei mit einem Anschluss mit dem Strompfad zwischen der ersten Wicklung 11a der stromkompensierten Drossel 11 und dem ersten Anschluss 111 des Gleichspannungseingangs 110 des Wechselrichters 10 verbunden. Der andere Anschluss des Zwischenkreiskondensators 12 ist mit dem Strompfad zwischen der zweiten Wicklung 11b der stromkompensierten Drossel 11 und dem zweiten Anschluss 112 der Gleichspannungseingangs 110 des Wechselrichters 10 verbunden.

Darüber hinaus kann der Spannungsumrichter 1 zwischen der stromkompensierten Drossel 11 und der Gleichspannungsquelle 2 noch zwei sogenannte Y-Kondensatoren 13-1 und 13-2 umfassen. Dabei ist ein erster Kondensator 13-1 auf der einen Seite mit dem Strompfad zwischen dem ersten Anschluss 21 der Gleichspannungsquelle und der ersten Wicklung 11a der stromkompensierten Drossel 11 verbunden. Der andere Anschluss dieses Kondensators 13-1 ist mit einem Bezugspotential verbunden. Analog ist ein zweiter Kondensator 13-2 auf der einen Seite mit einem Strompfad zwischen dem zweiten Anschluss 22 der Gleichspannungsquelle 2 und der zweiten Wicklung 11b der stromkompensierten Drossel 11 verbunden. Der andere Anschluss dieses zweiten Kondensators 13-2 ist ebenfalls mit einem Bezugspotential verbunden.

Zur Verbindung des Spannungsumrichters 1 mit der Gleichspannungsquelle 2 kann der Spannungsumrichter 1 über eine geeignete Kabelverbindung 20 mit der Gleichspannungsquelle 2 verbunden sein.

Auf der Ausgangsseite des Wechselrichters 10 des Spannungsumrichters 1 stellt der Wechselrichter 10 an einem Wechselspannungsausgang 120 eine mehrpfasige Wechselspannung bereit. Wie bereits zuvor beschrieben, ist der hier dargestellte dreiphasige Wechselspannungsausgang nur beispielhaft zu verstehen. Eine von drei abweichende Anzahl von Phasen für die Wechselspannung ist darüber hinaus ebenso möglich.

In dem hier dargestellten Ausführungsbeispiel umfasst der Wechselspannungsausgang 120 drei Anschlüsse 121, 122 und 123. Jeder dieser Anschlüsse 121 bis 123 ist mit einem korrespondierenden Anschluss des elektrischen Verbrauchers 3 verbunden. Auch hier kann zwischen dem Spannungsumrichter 1 und dem elektrischen Verbraucher 3 eine geeignete Kabelverbindung 30 vorgesehen sein. Ferner kann zwischen den einzelnen Phasenanschlüssen, also den Verbindungen zwischen den Anschlüssen 121 bis 123 des Wechselrichters 10 und dem elektrischen Verbraucher 3 auf der einen Seite und einem Bezugspotential auf der anderen Seite jeweils ein ausgangsseitiger Kondensator 14-1, 14-2 und 14-3 vorgesehen sein. Ein erster Anschluss eines ersten Kondensators 14-1 kann dabei elektrisch mit einem Strompfad zwischen dem ersten Anschluss 121 des Wechselspannungsausgangs 120 des Wechselrichters 10 sowie dem ersten Phasenanschluss des elektrischen Verbrauchers 3 verbunden sein. Der andere Anschluss des ersten Kondensators 14-1 kann mit einem Bezugspotential elektrisch verbunden sein. Analog kann der zweite Widerstand 14-2 in dem Strompfad zwischen dem zweiten Anschluss 122 des Wechselspannungsausgangs 120 und dem zweiten Phasenanschluss des elektrischen Verbrauchers 3 auf der einen Seite und dem Bezugspotential auf der anderen Seite verbunden sein. Ein dritter Kondensator 14-3 kann ebenso mit dem Strompfad zwischen dem dritten Anschluss 123 des Wechselspannungsausgangs 120 und dem dritten Phasenanschluss des elektrischen Verbrauchers 3 auf der einen Seite und dem Bezugspotential auf der anderen Seite verbunden sein.

Die ausgangsseitigen Kondensatoren 14-i zwischen dem Bezugspotential und den Anschlüssen 121, 122 und 123 am Wechselspannungsausgang 120 können dabei beispielsweise gemeinsam mit dem Wechselrichter 110 in einem gemeinsamen Leistungsmodul angeordnet werden. Insbesondere ist es dabei möglich, den Wechselrichter 10 und die Kondensatoren 14-i beispielsweise auf einem gemeinsamen Trägersubstrat anzuordnen. Alternativ können die Kondensatoren 14-i, die zwischen den Anschlüssen 121, 122 und 123 an dem Wechselspannungsanschluss 120 des Wechselrichters 10 und dem Bezugspotential angeordnet sind, auch gemeinsam mit dem elektrischen Verbraucher 3 zusammen in einer Einheit angeordnet werden. Beispielsweise können die Kondensatoren 14-i an den Anschlussklemmen des elektrischen Verbrauchers 3 angeordnet werden.

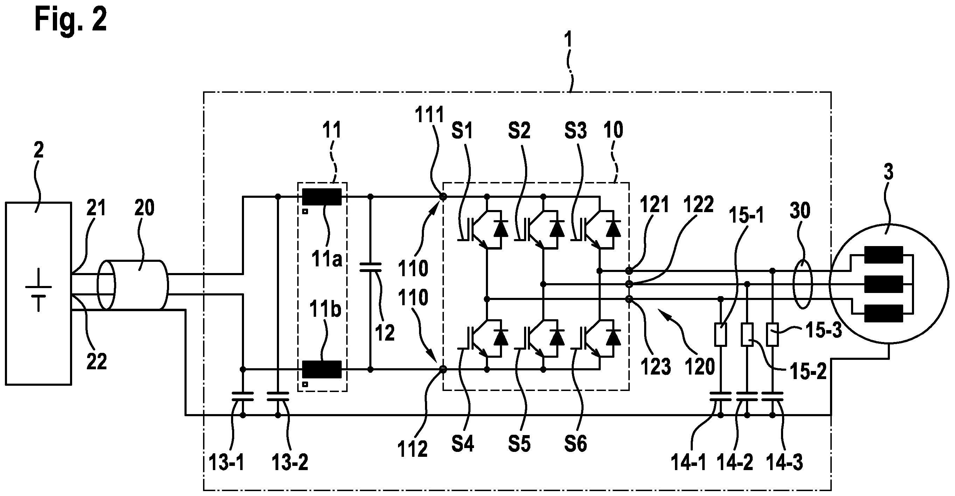

Figur 2 zeigt eine weitere Ausführungsform eines elektrischen Antriebssystems mit einem Spannungsumrichter 1 gemäß einer Ausführungsform. Diese Ausführungsform ist dabei weitestgehend identisch mit der zuvor beschriebenen Ausführungsform. Die beiden Ausführungsformen unterscheiden sich dabei nur darin, dass in der Ausführungsform gemäß Figur 2 anstelle der Kondensatoren 14-i zwischen den Anschlüssen 121, 122 und 123 des Wechselspannungsausgangs 120 und dem Bezugspotential nun eine Reihenschaltung aus jeweils einem Kondensator 14-i und einem elektrischen/ohmschen Widerstand 15-i vorgesehen ist. Dabei ist es unerheblich, ob die elektrischen Widerstände 15-i zwischen dem Bezugspotential und den entsprechenden Kondensatoren 14-i angeordnet sind, oder ob alternativ die Widerstände zwischen den Kondensatoren und den einzelnen Anschlüssen 121, 122 und 123 des Wechselspannungsausgangs 120 angeordnet sind und somit alle drei Kondensatoren 14-i auf der einen Seite mit dem gemeinsamen Bezugspotential verbunden sind.

Jede Reihenschaltung aus einem Widerstand 15-i und dem korrespondierenden Kondensator 14-i bildet somit ein RC-Glied. Die zusätzlichen ohmschen Widerstände 15-i dienen dabei als Dämpfungswiderstände. Vorzugsweise werden diese Widerstände dabei so groß wie möglich gewählt. Bei der Dimensionierung der Widerstände 15-i können die einzelnen RC-Glieder dabei auf einen vorgegebenen Frequenzbereich optimiert werden. Die Grenzfrequenz fg der RC-Glieder ergibt sich dabei mit derm Widerstand R und der Kapazität C des RC-Glieds zu:

$$fg = 1 / ( 2 \cdot \pi \cdot R \cdot C ).$$

Insbesondere kann als zu optimierender Frequenzbereich beispielsweise eine Entstörung für den Rundfunkempfang im Mittelwellen-Band gewählt werden. Dabei sollte die Grenzfrequenz größer als 2 MHz gewählt werden.

Die so zusätzlich eingebrachten Widerstände 15-i ermöglichen dabei eine Minimierung des zusätzlich ausgekoppelten Gleichtaktstroms und eine Dämpfung des vom Wechselrichter 10 emittierten Störspannungsspektrums insbesondere für einen gezielt vorgegebenen Frequenzbereich.

Werden dabei die Widerstände 15-i bzw. die RC-Glieder aus der Reihenschaltung von den Widerständen 15-i und den Kondensatoren 14-i gemeinsam mit den Bauelementen des Wechselrichters 10 in einem gemeinsamen Leistungsmodul angeordnet, so ist in diesem Fall ein besonders effizienter Aufbau möglich. Insbesondere ist es möglich, die für die Kühlung des Wechselrichters 10 vorgesehene Kühlung auch gleichzeitig zur Entwärmung der RC-Glieder, insbesondere der an den ohmschen Widerständen 15-i in Wärme umgesetzten elektrischen Energie vorzusehen. Alternativ können analog zu dem in Figur 1 beschriebenen Ausführungsbeispiel auch hier die RC-Glieder aus den Widerständen 14-i und 15-in dem elektrischen Verbraucher 3 angeordnet werden.

Als elektrische Widerstände 15-i bzw. als Kondensatoren 14-i können dabei grundsätzlich beliebige Ausführungsformen gewählt werden. Insbesondere sind zum Beispiel keramische SMD-Kondensatoren und SMD-Chip-Widerstände möglich.

Der erfindungsgemäße Spannungsumrichter 1 mit einer stromkompensierten Drossel 11 am Gleichspannungseingang des Wechselrichters 10 kann dabei für beliebige Anwendungen eingesetzt werden. So sind zum Beispiel elektrische Antriebssysteme für Elektrooder Hybridfahrzeuge möglich. Darüber hinaus sind ebenso Wechselrichter-gespeiste Industrieantriebe denkbar. Ferner kann der erfindungsgemäße Spannungsumrichter beispielsweise auch für Industriewechselrichter, wie zum Beispiel für Solaranlagen oder ähnliches, eingesetzt werden.

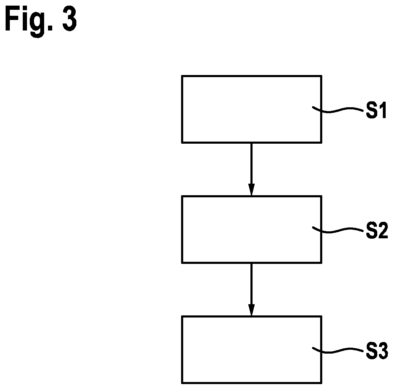

Figur 3 zeigt eine schematische Darstellung eines Ablaufdiagramms für ein Verfahren zum Reduzieren von Störspannungen von einem Spannungsumrichter, wie es einer Ausführungsform zugrunde liegt. In Schritt S1 wird ein Wechselrichter mit einem zweiphasigen Gleichspannungseingang und einem mehrphasigen Wechselspannungsausgang bereitgestellt. In Schritt S2 wird dieser bereitgestellte Wechselrichter am Gleichspannungseingang mit einer stromkompensierten Drossel gekoppelt. Ferner können in Schritt S3 zwischen einem Bezugspotential und je einer Phase des mehrphasigen Wechselspannungsausgangs des Wechselrichters jeweils ein Kondensator oder alternativ eine Reihenschaltung aus einem Kondensator und einem elektrischen Widerstand angeordnet werden.

Zusammenfassend betrifft die vorliegende Erfindung eine kostengünstige und effiziente Entstörung von Störsignalen aus einem Wechselrichter. Hierzu wird an einem Wechselrichter, insbesondere einem Pulswechselrichter, eingangsseitig eine stromkompensierte Drossel vorgesehen. Diese stromkompensierte Drossel wird vorzugsweise zwischen einer Gleichspannungsquelle und einem Zwischenkreiskondensator des Wechselrichters angeordnet. Auf diese Weise können mehrphasige Drosseln am Wechselspannungsausgang des Wechselrichters entfallen.

**Patentansprüche**

1.  Spannungsumrichter (1), mit:

    einem Wechselrichter (10), wobei der Wechselrichter (10), eine Mehrzahl von Schaltelementen (S1 .. S6) umfasst,
    mit einem zweiphasigen Gleichspannungseingang (110), der mit einer Gleichspannungsquelle (2) verbindbar ist, und mit einem mehrphasigen Wechselspannungsausgang (120), der mit einem elektrischen Verbraucher (3) verbindbar ist; und
    einer stromkompensierten Drossel (11), die zwischen dem Gleichspannungseingang (110) des Wechselrichters (10) und der Gleichspannungsquelle (2) angeordnet ist,
    wobei der Wechselspannungsausgang (120) des Wechselrichters (10) eine Mehrzahl von Phasenanschlüssen (121, 122, 123) umfasst, und wobei zwischen jedem Phasenanschluss (121, 122, 123) des Wechselrichters (10) und einem Bezugspotenzial ein Kondensator (14-i) oder eine Reihenschaltung von einem Kondensator (14-i) und einem elektrischen Widerstand (15-i) angeordnet ist, und wobei der Wechselrichter (10) sowie der Kondensator (14-i) bzw. die Reihenschaltung von Kondensator (14-i) und elektrischem Widerstand (15-i)in einem gemeinsamen Leistungsmodul angeordnet sind.

2.  Spannungsumrichter (1) nach Anspruch 1, wobei der Gleichspannungseingang (120) einen ersten Anschluss (111) und einen zweiten Anschluss (112) umfasst und wobei die stromkompensierte Drossel (11) eine erste Wicklung (11a) und eine zweite Wicklung (11b) umfasst, wobei die erste Wicklung (11a), zwischen dem ersten Anschluss (111) des Gleichspannungseingangs (110) des Wechselrichters (10) und einem ersten Anschluss (21) der Gleichspannungsquelle (2) angeordnet ist und die zweite Wicklung (11b), zwischen dem zweiten Anschluss (112)

des Gleichspannungseingangs (110) des Wechselrichters (10) und einem zweiten Anschluss (22) der Gleichspannungsquelle (2) angeordnet ist.

3. Spannungsumrichter (1) nach Anspruch 1 oder 2, ferner umfassend einen Zwischenkreiskondensator (12), der zwischen dem ersten Anschluss (111) und dem zweiten Anschluss (112) des Gleichspannungseingangs (110) des Wechselrichters (10) angeordnet ist, wobei der Zwischenkreiskondensator (12) zwischen der stromkompensierten Drossel (11) und dem Gleichspannungseingang (110) des Wechselrichters (10) angeordnet ist.

4. Elektrisches Antriebssystem, mit:

einer Gleichspannungsquelle (2);
einem elektrischen Motor; und
einem Spannungsumrichter (1) nach einem der Ansprüche 1 bis 3.

**Claims**

1. Voltage converter (1), comprising:

an inverter (10), wherein the inverter (10) comprises a plurality of switching elements (S1 ... S6),
comprising a two-phase DC voltage input (110), which is connectable to a DC voltage source (2), and comprising a polyphase AC voltage output (120), which is connectable to an electrical load (3); and
a current-compensated inductor (11) arranged between the DC voltage input (110) of the inverter (10) and the DC voltage source (2),
wherein the AC voltage output (120) of the inverter (10) comprises a plurality of phase terminals (121, 122, 123), and wherein a capacitor (14-i) or a series circuit comprising a capacitor (14-i) and an electrical resistor (15-i) is arranged between each phase terminal (121, 122, 123) of the inverter (10) and a reference potential, and wherein the inverter (10) and the capacitor (14-i) or respectively the series circuit comprising capacitor (14-i) and electrical resistor (15-i) are arranged in a common power module.

2. Voltage converter (1) according to Claim 1, wherein the DC voltage input (120) comprises a first terminal (111) and a second terminal (112) and wherein the current-compensated inductor (11) comprises a first winding (11a) and a second winding (11b), wherein the first winding (11a) is arranged between the first terminal (111) of the DC voltage input (110) of the inverter (10) and a first terminal (21) of the DC voltage source (2), and the second winding (11b) is arranged between the second terminal (112) of the DC voltage input (110) of the inverter (10) and a second terminal (22) of the DC voltage source (2).

3. Voltage converter (1) according to Claim 1 or 2, furthermore comprising a link capacitor (12) arranged between the first terminal (111) and the second terminal (112) of the DC voltage input (110) of the inverter (10), wherein the link capacitor (12) is arranged between the current-compensated inductor (11) and the DC voltage input (110) of the inverter (10).

4. Electric drive system, comprising:

a DC voltage source (2);
an electric motor; and
a voltage converter (1) according to any of Claims 1 to 3.

**Revendications**

1. Convertisseur de tension (1), comprenant :

un onduleur (10), l'onduleur (10) comprenant une pluralité d'éléments de commutation (S1...S6),
une entrée de tension continue biphasée (110) qui peut être reliée à une source de tension continue (2), et une sortie de tension alternative polyphasée (120) qui peut être reliée à un consommateur électrique (3) ; et
une bobine de choc à compensation de courant (11) qui est disposée entre l'entrée de tension continue (110) de l'onduleur (10) et la source de tension continué (2),
la sortie de tension alternative (120) de l'onduleur (10) comprenant une pluralité de bornes de phase (121, 122, 123), et un condensateur (14-i) ou un circuit série formé d'un condensateur (14-i) et d'une résistance électrique (15-i) étant disposé entre chaque borne de phase (121, 122, 123) de l'onduleur (10) et un potentiel de référence, et
l'onduleur (10) ainsi que le condensateur (14-i) ou le circuit série formé du condensateur (14-i) et de la résistance électrique (15-i) étant disposés dans un module d'alimentation commun.

2. Convertisseur de tension (1) selon la revendication 1, l'entrée de tension continue (120) comprenant une première borne (111) et une deuxième borne (112) et la bobine de choc à compensation de courant (11) comportant un premier enroulement (11a) et un deuxième enroulement (11b), le premier enroulement (11a) étant disposé entre la première borne (111) de l'entrée de tension continue (110) de l'onduleur (10) et une première borne (21) de la source de tension continue (2) et le deuxième enroulement (11b) étant disposé entre la deuxième borne (112) de l'entrée de tension continue (110) de l'onduleur (10) et une deuxième borne (22) de la source de tension continue (2) .

3. Convertisseur de tension (1) selon la revendication 1 ou 2, comprenant en outre un condensateur de circuit intermédiaire (12) qui est disposé entre la première borne (111) et la deuxième borne (112) de l'entrée de tension continue (110) de l'onduleur (10), le condensateur de circuit intermédiaire (12) étant disposé entre la bobine de choc à compensation de courant (11) et l'entrée de tension continue (110) de l'onduleur (10).

4. Système d'entraînement électrique, comprenant :

   une source de tension continue (2) ;
   un moteur électrique ; et
   un convertisseur de tension (1) selon l'une des revendications 1 à 3.

Fig. 1

Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4107391 A1
- DE 102013100246 A1
- DE 102012109638 A1
- US 5552976 A
- US 2012275201 A1